Europäisches Patentamt

European Patent Office

Office européen des brevets

(19)

(11) EP 0 780 783 A1

# (12) EUROPÄISCHE PATENTANMELDUNG

(43) Veröffentlichungstag:
25.06.1997 Patentblatt 1997/26

(51) Int. Cl.6: G06K 11/08

(21) Anmeldenummer: 95120501.2

(22) Anmeldetag: 23.12.1995

(84) Benannte Vertragsstaaten:
DE FR GB IT NL

(71) Anmelder: Deutsche ITT Industries GmbH
79108 Freiburg (DE)

(72) Erfinder: Sieben, U., Dr. Dipl.-Phys.
D-79276 Reute (DE)

## (54) Virtual-Reality-Wiedergabesystem mit einer optischen Lageerkennungseinrichtung

(57) Virtual-Reality-Wiedergabesystem (vr) mit einer optischen Lageerkennungseinrichtung, die eine als festen Bezugspunkt dienende Strahlungsquelle (q) und ein optisches Empfangssystem (oe) enthält, das mit dem beweglichen Wiedergabesystem (vr) mechanisch fest verbunden ist, wobei das optische Empfangssystem (oe) drei Strahlungsdetektoren (d1, d2, d3) enthält, deren optische Achsen (o1, o2, o3), zueinander parallel ausgerichtet sind, der erste Strahlungssdedektor (d1) ein Empfangsdiagramm aufweist, das in einem ersten Winkelbereich (w1) einen steigenden/fallenden Empfindlichkeitsverlauf zeigt, der zweite Strahlungsdetektor (d2) ein Empfangsdiagramm aufweist, das in einem zweiten Winkelbereich (w2) einen steigenden/fallenden Empfindlichkeitsverlauf zeigt und der dritte Strahlungsdetektor (d3) ein Empfangsdiagramm aufweist, das mindestens innerhalb des ersten und zweiten Winkelbereiches (w1, w2) einen flachen Empfindlichkeitsverlauf zeigt.

FIG.1

EP 0 780 783 A1

# Beschreibung

Die Erfindung betrifft ein lageabhängiges Virtual-Reality-Wiedergabesystem, das mit einer Trageeinrichtung räumlich fest verbunden ist und durch Einbeziehung der relativen Lage im Raum dem Betrachter einen wirklichkeitsnahen Eindruck der betrachteten Scheinwelt verschafft. Zu einer möglichst wirklichkeitsgetreuen Wiedergabe gehört es, daß sich das Scheinwelt-Bild sinngemäß ändert, wenn der Betrachter seinen Kopf in seitlicher oder vertikaler Richtung dreht.

Es ist Aufgabe der Erfindung ein Virtual-Reality-Wiedergabesystem mit einer einfachen Lageerkennungseinrichtung anzugeben, die mindestens in einem vorgegebenen Winkelbereich vertikale und/oder horizontale Schwenkungen erfaßt. Das System sollte dabei auch ausbaufähig sein, so daß in einer horizontalen Ebene Schwenkungen um 360° erfaßt werden können. Eine weitere Ergänzung sollte die Erkennung einer axialen Drehung in Blickrichtung sein.

Die Hauptaufgabe wird nach den Merkmalen des Anspruchs 1 durch ein Virtual-Reality-Wiedergabesystem mit einer optischen Lageerkennungseinrichtung gelöst,

- die mindestens eine einen festen Bezugspunkt im Raum definierende Strahlungsquelle und ein optisches Empfangssystem enthält, das mit dem beweglichen Wiedergabesystem mechanisch fest verbunden ist, wobei das optische Empfangssystem mindestens einen ersten, zweiten und dritten Strahlungsdetektor enthält, deren optischen Achsen, eine erste bzw. zweite bzw. dritte optische Achse, zueinander parallel ausgerichtet sind und in einer Grundposition auf die mindestens eine Strahlungsquelle zielen,

- der erste Strahlungsdetektor hat ein Empfangsdiagramm, das in einer ersten Ebene, die durch die erste optische Achse und eine durch das optische Empfangssystem vorgegebene erste Richtung definiert ist, in einem die erste optische Achse einschließenden ersten Winkelbereich einen steigenden/fallenden Empfindlichkeitsverlauf aufweist, der im wesentlichen monoton ist,

- der zweite Strahlungsdetektor hat ein Empfangsdiagramm, das in einer zweiten Ebene, die durch die von der zweite optische Achse und eine durch das optische Empfangssystem vorgegebene zweite Richtung definiert ist, in einem die zweite optische Achse einschließenden zweiten Winkelbereich einen steigenden/fallenden Empfindlichkeitsverlauf aufweist, der im wesentlichen monoton ist und

- der dritte Strahlungsdetektor hat ein gleichförmiges Empfangsdiagramm, das mindestens innerhalb des ersten und zweiten Winkelbereiches einen im Vergleich zum ersten und zweiten Strahlungsdetektor flachen Empfindlichkeitsverlauf aufweist.

In Anlehnung an den Wortlaut des Anspruchs 1 wird die gestellte Aufgabe auch durch die Merkmale eines unabhängigen Anspruch 7 gelöst, bei denen lediglich eine Strahlumkehr vorliegt, wodurch Strahlungsgeber zu Detektoren und Detektoren zu Strahlungsgebern werden. Die Geometrie des optischen Systems bleibt jedoch voll erhalten.

Der Vorteil der Erfindung liegt im wesentlichen in der Einfachheit des Lageerkennungssystems mit der dazugehörigen elektronischen Auswerteeinrichtung. Kernstück ist dabei das elektrooptische Empfangssystem, das drei Strahlungsdetektoren mit unterschiedlichen Empfangsdiagrammen aufweist, aus denen mit einfachen Mitteln ein horizontales und ein vertikales Positionssignal gebildet werden können. Die unterschiedlichen Empfangsdiagramme lassen sich im einfachsten Fall durch zwei Blenden bilden, die vor den Strahlungsdetektoren liegen und diese teilweise abdecken. Durch eine Winkeländerung ändert sich der jeweilige Verdeckungsgrad, so daß die Empfangsintensität zu- oder abnimmt. Aus einem Vergleich der Intensität mit einem Strahlungsdetektor ohne Blende läßt sich ein Positionssignal bestimmen, das in erster Näherung dem jeweiligen Winkelwert entspricht. Ein ähnliches elektrooptisches System ist in EP 0 377 055 für einen positionsgesteuerten Fernbedienungsgeber beschrieben, wobei jedoch das Sender- und nicht das Empfangssystem unterschiedliche Strahlungsdiagramme aufweist. Die unterschiedlichen Empfangsdiagramme können auf verschiedene Weisen erreicht werden, z.B. durch Lamellen, durch spezielle Gestaltung der Strahlungsdetektoren, durch unterschiedliche Lichtbrechung, durch Trübung und dergleichen mehr.

Die Erfindung und weitere Vorteile werden nun anhand der Figuren der Zeichnung näher erläutert:

Fig. 1 zeigt schematisch einen Helm mit einem Virtual-Reality-Wiedergabesystem auf dem ein optisches Empfangssystem fest verbunden ist, das eine Lageerkennung nach der Erfindung ermöglich,

Fig. 2 zeigt schematisch ein besonders einfaches Ausführungsbeispiel für das optische Empfangssystem in der Aufsicht von vornen,

Fig. 3 zeigt schematisch das optische Empfangssystem von oben,

Fig. 4 zeigt die Ausbildung der drei Empfangsdiagramme von der Seite in horizontaler und vertikaler Aufsicht,

Fig. 5 zeigt eine einfache Auswerteschaltung,

Fig. 6 zeigt die Anordnung einer Mehrzahl von Strahlungsquellen, mit denen eine Rundum-Lageerkennung ermöglicht wird,

Fig. 7 zeigt schematisch eine Anordnung mit Polarisationseinrichtungen, mit denen eine axiale Drehung erkennbar wird,

Fig. 8 zeigt zu Fig. 7 graphisch die zugehörigen trigonometrischen Beziehungen.

Fig. 9 zeigt eine Anordnung mit Strahlumkehr und

Fig. 10 zeigt eine weitere Anordnung mit Strahlumkehr.

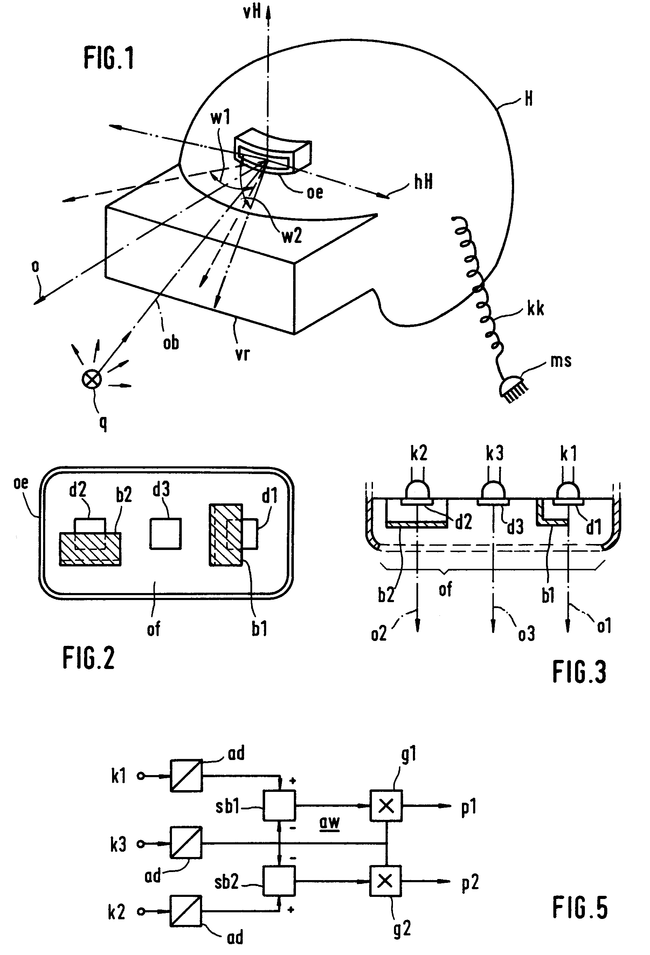

In Fig. 1 ist ein Helm H dargestellt, der an seiner vorderen Seite das Empfangssystem oe eines elektrooptischen Lageerkennungssystems für das Virtual-Reality-Wiedergabesystem vr enthält. Es liegt in der Blickrichtung o des Betrachters, die durch die Helmgeometrie vorgegeben ist. Senkrecht zur Blickrichtung o findet sich die vertikale Helmachse vH. In die verbleibende dritte Raumrichtung zeigt eine horizontale Helmachse hH. Die üblichen Drehbewegungen des Kopfes und damit des Helmes H erfolgen in einer vertikalen Ebene, die durch die Blickrichtung o und die vertikale Helmachse vH definiert ist, und in einer horizontalen Ebene, die durch die Blickrichtung o und die horizontale Helmachse hH definiert ist. Beide Bewegungen lassen sich auch durch ein räumliches Polarkoordinatensystem mit den entsprechenden Winkelangaben beschreiben. Hierzu ist lediglich ein Bezugspunkt in der Horizontalebene erforderlich, der beispielsweise durch eine räumlich feste Strahlungsquelle q definiert wird. Die Verbindungslinie zwischen dem Bezugspunkt und dem optischen Empfangssystem oe definiert eine raumfeste Bezugsrichtung oder Bezugsachse ob. Am Helm ist seitlich ein Anschlußkabel kk mit einem Mehrfachstekker ms angebracht, über den die elektronischen Videosignale für das Virtual-Reality-Wiedergabesystem vr, Audiosignale und Steuersignale übertragen werden. Statt des Helmes ist als Trageeinrichtung auch eine Art Brille möglich, wenn die Elektronik und das Wiedergabesystem klein genug ausgebildet werden können.

Fig. 2 zeigt schematisch die Aufsicht von vornen auf das optische Empfangssystem oe, das im Bereich der Strahlungsdetektoren ein optisches Fenster mindestens für die Wellenlänge des gesendeten Lichtes aufweist. Das optische Empfangssystem oe enthält drei Strahlungsdetektoren d1, d2, d3, wobei bei dem dargestellten Ausführungsbeispiel der erste und zweite Strahlungsdetektor d1, d2 etwa zur Hälfte durch eine erste bzw. zweite Blende b1, b2 verdeckt sind. Die gerade Verdeckungskante der ersten Blende b1 erstreckt sich in vertikaler Richtung und die gerade Verdeckungskante der zweiten Blende b2 erstreckt sich in horizontaler Richtung.

Aus Fig. 3, die in vertikaler Aufsicht das optische Empfangssystem oe zeigt, ist erkennbar, daß der wirksame Teil der Blenden b1, b2 vor den Strahlungsdetektoren d1, d2 liegt. Die Lage der optischen Achsen o1, o2, o3 wird durch die Ausrichtung der drei Strahlungsdetektoren d1, d2, d3 bestimmt, die ohne die Blenden b1, b2 nach Fig. 2 und Fig. 3 ein möglichst gleichförmiges, drehsymmetrisches Empfangsdiagramm aufweisen sollen. Die Modifikation der Empfangsdiagramme soll definiert durch die Ausbildung der ersten und zweiten Blende b1, b2 erfolgen. Für die Anordnung ist es ferner wünschenswert, daß die drei Strahlungsdetektoren flächenförmig ausgebildet sind und möglichst ein Rechteck bilden, das parallel zur aktiven Blendenkante ausgerichtet ist. Selbstverständlich kann die flächige Ausbildung der Strahlungsdetektoren auch mit anderen Mitteln erreicht werden, beispielsweise mittels kleiner Mattscheiben.

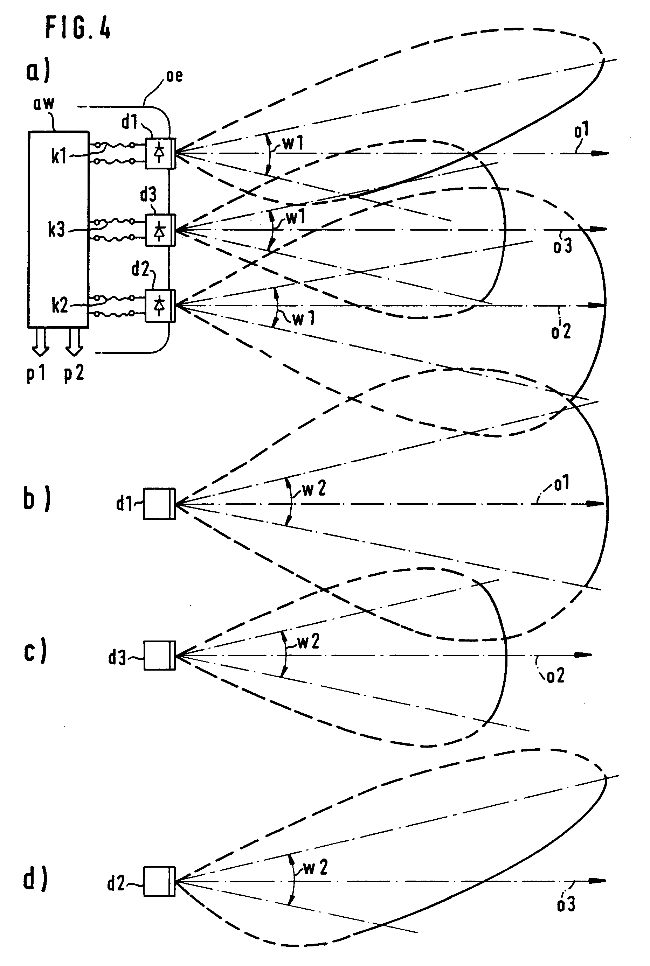

Fig. 4 ist in vier einzelne Diagramme a) bis d) aufgeteilt. Das Diagramm a) zeigt beispielsweise in horizontaler Aufsicht die Ausbildung der Empfangsdiagramme des ersten, zweiten und dritten Strahlungsdetektors d1, d2, d3. In einem horizontalen Winkelbereich w1 zeigt der erste Strahlungsdetektor d1 einen steigenden/fallenden Empfindlichkeitsverlauf, je nachdem in welcher Richtung der Winkelbereich w1 durchlaufen wird. Der zweite und dritte Strahlungsdetektor d2, d3 zeigen in diesem Winkelbereich w1 einen relativ flachen Verlauf. Die gleichförmigen Intensitätsunterschiede spielen für die Auswertung keine Rolle, weil dort eine Normierung stattfindet.

Die Diagramme b) und c) zeigen im senkrechten Schnitt entlang den optischen Achsen o1, o2 den relativ flachen Empfindlichkeitsverlauf in einem mittleren Winkelbereich, dem vertikalen Winkelbereich w2, des ersten und zweiten Strahlungsdetektors d1, d3. Im Diagramm d) zeigt der vertikale Winkelbereich w2 des zweiten Strahlungsdetektors d2 jedoch einen steigenden/fallenden Empfindlichkeitsverlauf, der im wesentlichen monoton ist.

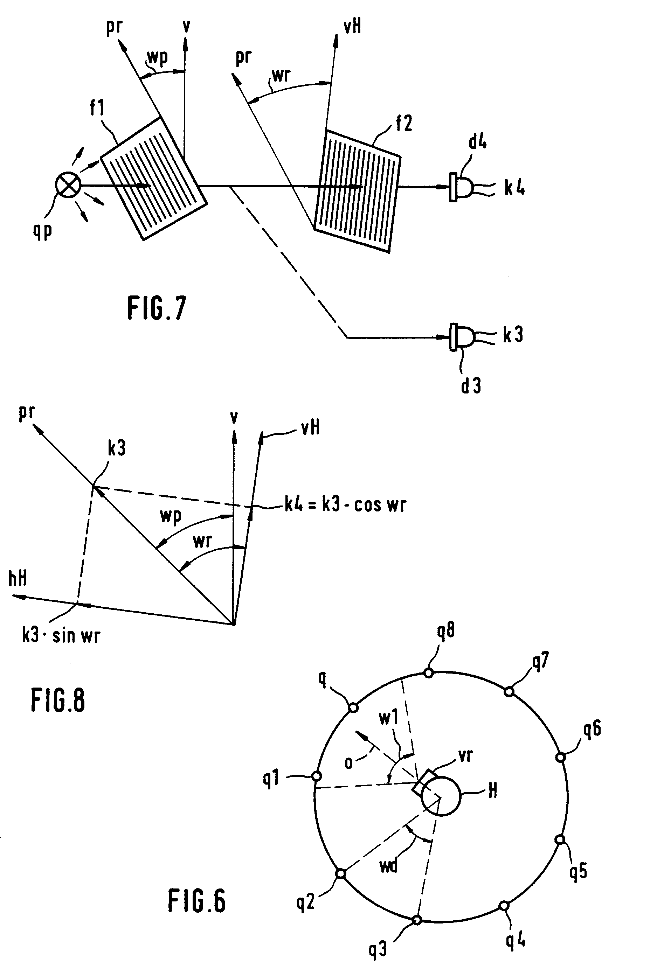

In Fig. 5 ist eine einfache Schaltung als Beispiel für eine Auswerteeinrichtung aw angegeben, die aus den Ausgangssignalen k1, k2, k3 der drei Strahlungsdetektoren d1, d2, d3 ein erstes und ein zweites Positionssignal p1, p2 bildet, das einer horizontalen bzw. vertikalen Winkelabweichung von einer festen Bezugsrichtung ob entspricht. Die Wirkungsweise der Schaltung wird am einfachsten verständlich, wenn angenommen wird, daß bei einer parallelen Ausrichtung der drei optischen Achsen o1, o2, o3 auf die Bezugsrichtung ob die jeweiligen Empfindlichkeiten der drei Strahlungsdetektoren d1, d2, d3 gleichgroß sind, so daß die Ausgangssignale k1, k2, k3 ebenfalls gleichgroß sind. Dieser Zustand entspricht der Darstellung der Empfangsdiagramme von Fig. 4, wenn man dort die Durchdringungspunkte durch die horizontale und vertikale Ebene betrachtet.

Damit die Gleichheit der Empfindlichkeiten bei den jeweiligen Durchdringungspunkten durch die horizontale und vertikale Ebene gewährleistet ist, muß die Grundempfindlichkeit des ersten und zweiten Strahlungsdetektors d1, d2 etwa doppelt so groß sein wie die Grundempfindlichkeit des dritten Strahlungsdetektors d3, weil dessen Empfangsfläche (vgl. Fig. 2) für die frontale Blickrichtung o doppelt so groß ist. Wird dem ersten bzw. zweiten Strahlungsdetektor d1, d2 jeweils ein gleichgroßer zweiter Strahlungsdetektor parallelgeschaltet, der in gleicher Weise von der ersten bzw. zweiten Blende b1, b2 abgedeckt wird, dann wird diese Bedingung leicht erfüllt.

Wenn die Bezugsachse ob und die Blickrichtung o übereinstimmen, dann sind für den vorgegebenen Fall die Ausgangssignale k1, k3 des ersten und dritten Strahlungsdetektors d1, d3 gleichgroß, so daß das Ausgangssignal einer ersten Subtrahierschaltung sb1 zu Null wird. In gleicher Weise wird das Ausgangssignal einer zweiten Subtrahierschaltung sb2 zu Null, die das Ausgangssignal k2 des zweiten Strahlungsdetektors d2 mit dem Ausgangssignal k3 des dritten Strahlungsdetektor d3 vergleicht. Die beiden Positionssignale p1, p2 haben damit zutreffend den Wert Null, weil keinerlei Winkelabweichung vorliegt. Wenn die Ausgangssignale k1, k2 größer oder kleiner werden, dann ändert sich das erste bzw. zweite Positionssignal p1, p2 sinngemäß und zeigt damit eine entsprechende Winkelabweichung an. Mit der ersten und zweiten Normierungsschaltung g1, g2 wird der Wert der Positionssignale an die winkelabhängige Empfindlichkeit der Strahlungsdetektoren, die grundsätzlich dem Empfangsdiagramm des dritten Strahlungsdetektors d3 entspricht, angepaßt, wodurch die ausnutzbaren Winkelbereiche w1, w2 größer werden. Die Normierungsschaltungen können beispielsweise durch Quotientenbildner realisiert sein.

In der Anordnung nach Fig. 6 sind außer der einen Strahlungsquelle q, die einen ersten Bezugspunkt im Raum definiert, weitere Strahlungsquellen q1 bis q8 vorhanden, die weitere feste Bezugspunkte definieren und auf der gleichen horizontalen Ebene wie die Strahlungsquelle q liegen. Sie umgeben den Betrachter, der durch den Helm H dargestellt ist, etwa kreisförmig, wobei die einzelnen Strahlungsquellen etwa gleiche Winkelabstände wd voneinander aufweisen. Diese Winkelabstände wd sind kleiner oder höchstens gleich dem in der gleichen Ebene liegenden ersten Winkelbereich w1, der durch das optische Empfangssystem oe vorgegeben wird. Um die einzelnen Strahlungsquellen voneinander unterscheiden zu können werden sie im Multiplexbetrieb, vorzugsweise nacheinander, angesteuert. Die Synchronisierung mit der Auswerteschaltung aw erfolgt über Steuersignale, die dem Helm H über die entsprechenden Leitungen kk zugeführt werden (vgl. Fig.1). Die Auswerteschaltung aw muß für die jeweiligen Überlappungsbereiche Speichereinrichtungen und Interpolationseinrichtungen zur Verfügung haben, damit die Bewegungserkennung im gesamten Umfangsbereich möglichst gleichförmig bleibt.

In Fig. 7 ist schematisch eine Polarisationseinrichtung dargestellt, mit der axiale Drehungen um die Blickrichtung o erkannt werden können. Eine derartige axiale Drehung soll auch in der dargestellten Scheinwelt eine entsprechende Drehung bewirken. Eine 360°-Drehung ist wie in der Wirklichkeit nicht erforderlich. Dies erleichtert die Anforderung an das gesamte optische System. Es wird durch eine Polarisations-Strahlungsquelle qp gebildet, die sich neben der jeweiligen Strahlungsquelle q bzw. q1 bis q8 befindet bzw. diese ersetzt. Ein erstes Polarisationsfilter f1 läßt nur Schwingungen der Polarisationsrichtung pr basieren. Das optische Empfangssystem oe enthält ein zweites Polarisationsfilter f2, dessen Polarisationsrichtung beispielsweise parallel zur vertikalen Helmachse vH ist. Schließlich wird die Strahlung mittels eines Polarisations-Strahlungsempfängers d4 in ein elektrisches Ausgangssignal k4 umgewandelt. Das erforderliche Referenzelement für den Vergleich kann beispielsweise das Ausgangssignal k3 des dritten Strahlungsdetektors d3 sein. Aufwendigere Detektoren nach dem Polarisationsfilterprinzip erfordern einen weiteren Strahlungsdetektor mit einem weiteren Polarisationsfilter, dessen Polarisationswinkel gegenüber dem zweiten Polarisationsfilter f2 gedreht ist. Hierdurch lassen sich Vieldeutigkeiten bei der Winkelangabe beseitigen.

Das Polarisationssystem läßt sich für den Anwendungsfall jedoch vereinfachen, wenn die Polarisationsrichtung pr der Polarisations-Signalquelle qp etwa um 45° gegenüber der Vertikalrichtung v gedreht wird, weil dann die Auswertung ähnlich wie bei den Empfindlichkeitsdiagrammen der Strahlungsdetektoren d1, d2, d3 erfolgen kann. In einem bestimmten axialen Winkelbereich, der die Vertikalrichtung v mit einschließt, weist dann das Ausgangssignal k4 einen steigenden/fallenden Signalverlauf auf, der im wesentlichen monoton ist.

Die Winkelbeziehungen der Polarisationseinrichtung von Fig. 7 sind in Fig. 8 mittels der einzelnen Komponenten graphisch dargestellt. Das Ausgangssignal k3 des dritten Strahlungsdetektors d3 entspricht einem ersten Bezugswert, der die gleiche Richtung wie die Polarisationsrichtung pr aufweist. Das Ausgangssignal k4 entspricht einem zweiten Bezugswert, der in Richtung der vertikalen Helmachse vH weist. Mit dem ersten Bezugswert k3 ist er über eine cos-Beziehung verknüpft, nämlich $k4 = k3 \circ \cos(wr)$, wobei wr der axiale Drehwinkel zwischen der Polarisationsrichtung pr und der vertikalen Helmachse vH ist. Wenn die Polarisationsrichtung des zweiten Polarisationsfilter f2 in Richtung der horizontalen Helmachse hH liegt, dann wäre der zweite Bezugswert eine sin-Beziehung, nämlich $k3 \circ \sin(wr)$. Der gesuchte Drehwinkel der vertikalen Helmachse vH gegenüber der Vertikalrichtung v ist die Differenz aus dem Drehwinkel wr und dem Neigungswinkel wp des ersten Polarisationsfilters f1.

Axiale Drehungen um die von der Blickrichtung o gebildete Achse, aber auch um die horizontale Helmachse hH können auch mit einem elektromechanisch einfachen System ermittelt werden, bei dem die Schwerpunktlage eines Körpers ausgewertet wird. Die entsprechenden Positionssignale können die optisch ermittelten ersetzen oder ergänzen.

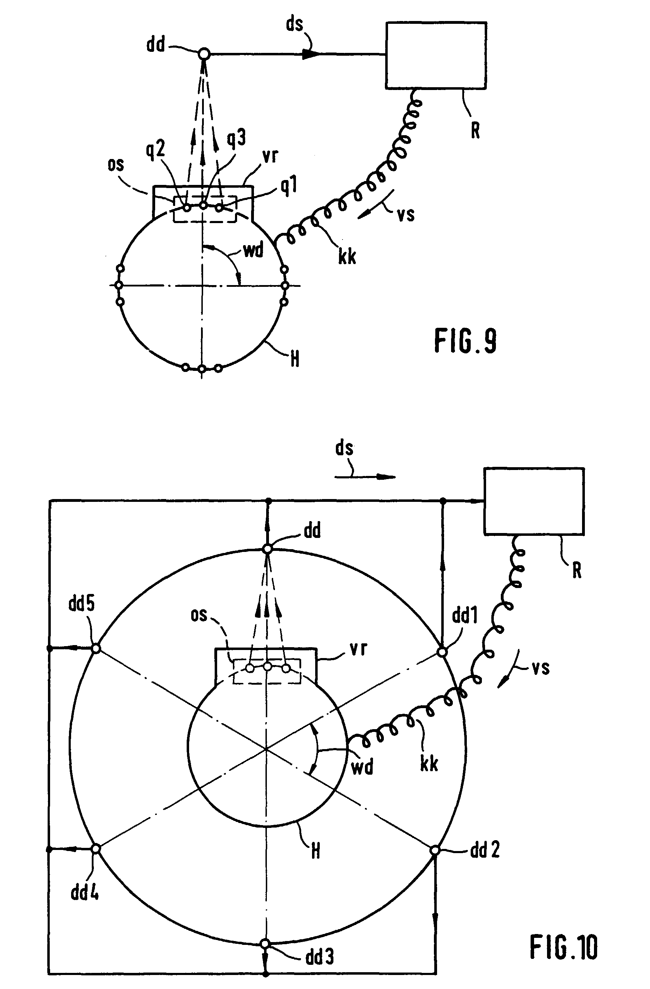

Bei optischen Systemen ist meist auch eine Strahlungsumkehr möglich, ohne daß sich die Geometrie des gesamten Systems und damit auch die grundsätzliche Wirkungsweise ändert. Zur Verdeutlichung wird auf das Strahlungssystem in der bereits genannten EP 0 377 055 verwiesen, das gegenüber den bisherigen Ausführungen invertiert ist. Eine ausführliche Erörterung erübrigt sich daher. Trotzdem hat die Strahlungsumkehr einige Folgen, die anhand der Darstellungen von Fig. 9 und Fig. 10 erörtert werden.

In Fig. 9 sind in einem optischen Sendesystem os, das mit dem Helm H fest verbunden ist, drei Strahlungsquellen q1, q2, q3 vorhanden. Sie müssen nacheinander angesteuert werden, damit sie von dem einzigen Strahlungsdetektor dd getrennt werden können. Die empfangenen Intensitäten werden als elektrische Signale ds einem Rechner R zugeführt, der das zugehörige Virtual-Reality-Bild berechnet und als Videosignal vs dem Virtual-Reality-Wiedergabesystem vr zugeführt. Bei dem in Fig. 9 dargestellten System sind keinerlei elektronische Signale, die sich auf die jeweilige Position beziehen, vom Helm H über Signalleitungen kk an den Rechner R zu übertragen. Daher ist diese Anordnung für einfache Systeme, beispielsweise in einem Verleih- oder Virtual-Reality-Spielcenter bestens geeignet, bei denen der Zentralrechner R möglichst viele Funktionen übernehmen soll, um die zu tragenden Wiedergabeeinrichtungen möglichst einfach zu halten. Volldrehungen um 360° C werden nach diesem Ausführungsbeispiel durch weitere optische Sendesysteme ermöglicht, die am Helm H angebracht sind und deren optische Achsen die horizontale Ebene in gleiche Segmente mit dem Winkel wd einteilen.

In Fig. 10 wird die 360° C-Funktionsfähigkeit dadurch erreicht, daß nicht nur ein einziger Strahlungsdetektor dd vorhanden ist, sondern weitere Strahlungsdetektoren dd1 bis dd5, die die horizontale Ebene ebenfalls in gleiche Segmente mit dem Winkel wd bezüglich der zentralen Position des Helmes H einteilen. Diese Anordnung ist noch vorteilhafter für die angegebenen Spielcenter, weil die Helme H nur noch ein einziges optisches System os benötigen. Die einzelnen Strahlungsdetektoren dd, dd1 ... dd5 werden durch den Rechner R zyklisch abgefragt oder aktiviert.

**Patentansprüche**

1.  Virtual-Reality-Wiedergabesystem (vr) mit einer optischen Lageerkennungseinrichtung, die mindestens eine einen festen Bezugspunkt im Raum definierende Strahlungsquelle (q) und ein optisches Empfangssystem (oe) enthält, das mit dem beweglichen Wiedergabesystem (vr) mechanisch fest verbunden ist, wobei das optische Empfangssystem (oe) mindestens einen ersten, zweiten und dritten Strahlungsdetektor (d1, d2, d3) enthält, deren optische Achsen, eine erste bzw. zweite bzw. dritte optische Achse (o1, o2, o3), zueinander parallel ausgerichtet sind und in einer Grundposition auf die mindestens eine Strahlungssquelle (q) zielen,

    - der erste Strahlungssdedektor (d1) hat ein Empfangsdiagramm, das in einer ersten Ebene, die durch die erste optische Achse (o1) und eine durch das optische Empfangssytem (eo) vorgegebene erste Richtung (hH) definiert ist, in einem die erste optische Achse (o1) einschließenden ersten Winkelbereich (w1) einen steigenden/fallenden Empfindlichkeitsverlauf aufweist, der im wesentlichen monoton ist,

    - der zweite Strahlungsdetektor (d2) hat ein Empfangsdiagramm, das in einer zweiten Ebene, die durch die zweite optische Achse (o2) und eine durch das optische Empfangssystem (eo) vorgegebene zweite Richtung (vH) definiert ist, in einem die zweite optische Achse (o2) einschließenden zweiten Winkelbereich (w2) einen steigenden/fallenden Empfindlichkeitsverlauf aufweist, der im wesentlichen monoton ist, und

    - der dritte Strahlungsdetektor (d3) hat ein gleichförmiges Empfangsdiagramm, das mindestens innerhalb des ersten und zweiten Winkelbereiches (w1, w2) einen im Vergleich zum ersten oder zweiten Strahlungsdetektor (d1, d2) flachen Empfindlichkeitsverlauf aufweist.

2.  Virtual-Reality-Wiedergabesystem (vr) nach Anspruch 1, dadurch gekennzeichnet, daß außer der einen Strahlungsquelle (q) weitere Strahlungsquellen (q1 bis q8) vorhanden sind, die weitere feste Bezugspunkte definieren, die auf der gleichen horziontalen Ebene wie die eine Strahlungsquelle (q) liegen, die das Virtual-Reality-Wiedergabesystem (vr) im wesentlichen kreisförmig umgeben und die gleiche Winkelabstände (wd) voneinader haben, wobei die Winkelabstände kleiner/gleich dem in der gleichen Ebene liegenden ersten Winkelbereich (w1) sind.

3.  Virtual-Reality-Wiedergabesystem (vr) nach Anspruch 1 oder 2, dadurch gekennzeichnet, daß es zur Erkennung von axialen Drehungen, insbesondere um die von der Blickrichtung (o) gebildeten Achse, die optische Lageerkennungseinrichtung optische Polarisationseinrichtungen mit Polarisationsfiltern (f1, f2), mindestens eine Polarisations-Strahlungsquelle (qp) und mindestens einen Polarisations-Strahlungsempfänger (d4) enthält.

4.  Virtual-Reality-Wiedergabesystem (vr) nach Anspruch 3, dadurch gekennzeichnet, daß das Ausgangssignal (k3) des dritten Strahlungsdetektors (d3) ein erster Bezugswert (k3) und das Ausgangssignal (k4) des mindestens einen Polarisations-Strahlungsempfängers (d4) ein zweiter Bezugswert für die Berechnung des axialen Drehwinkels (wr) ist.

5.  Virtual-Reality-Wiedergabesystem (vr) nach Anspruch 4, dadurch gekennzeichnet, daß der erste und zweite Bezugswert bei der Berechnung der Axialdrehung trigonometrischen Bezugswerten ($k3$, $k3 \cdot cos(wr)$ bzw $k3$, $k3 \cdot sin(wr)$) entsprechen, die sich auf die Polarisationsrichtungen eines ersten und zweiten Polaristionsfilters (f1, f2) beziehen.

6. Virtual-Reality-Wiedergabesystem (vr) nach Anspruch 2, dadurch gekennzeichnet, daß die Strahlungsquelle (q) und die weiteren Strahlungsquellen (q1 bis q8) im Multiplexbetrieb angesteuert sind.

7. Virtual-Reality-Wiedergabesystem (vr) mit einer optischen Lageerkennungseinrichtung, die mindestens einen einen festen Bezugspunkt im Raum definierenden Strahlungsdetektor (dd) und mindestens ein optisches Sendesystem (os) enthält, das mit dem beweglichen Wiedergabesystem (vr) mechanisch fest verbunden ist, wobei das optische Sendesystem (os) mindestens eine erste, zweite und dritte Strahlungsquelle (q1, q2, q3) enthält, deren optische Achsen, eine erste bzw. zweite bzw. dritte optische Achse (o1, o2, o3), zueinander parallel ausgerichtet sind und in einer Grundposition auf den mindestens einen Strahlungsdetektor (dd) zielen,

   - die erste Strahlungsquelle (q1) hat ein Intensitätsdiagramm, das in einer ersten Ebene, die durch die erste optische Achse (o1) und einer durch das optische Sendesytem (os) vorgegebenen ersten Richtung (hH) definiert ist, in einem die erste optische Achse (o1) einschließenden ersten Winkelbereich (w1) einen steigenden/fallenden Intensitätsverlauf aufweist, der im wesentlichen monoton ist,

   - die zweite Strahlungsquelle (q2) hat ein Intensitätsdiagramm, das in einer zweiten Ebene, die durch die zweite optische Achse (o2) und eine durch das optische Sendesystem (os) vorgegenenen zweiten Richtung (vH) definiert ist, in einem die zweite optische Achse (o2) einschließenden zweiten Winkelbereich (w2) einen steigenden/fallenden Intensitätsverlauf aufweist, der im wesentlichen monoton ist, und

   - die dritte Strahlungsquelle (q3) hat ein gleichförmiges Intensitätsdiagramm, das mindestens innerhalb des ersten und zweiten Winkelbereiches (w1, w2) einen im Vergleich zum ersten oder zweiten Strahlungsdetektor (d1, d2) flachen Empfindlichkeitsverlauf aufweist.

8. Virtual-Reality-Wiedergabesystem (vr) nach Anspruch 7, dadurch gekennzeichnet, daß außer dem einen Strahlungsdetektor (dd) weitere Strahlungsdetektoren (dd1 bis dd5) vorhanden sind, die weitere feste Bezugspunkte definieren, die auf der gleichen horziontalen Ebene wie der eine Strahlungsdetektor (dd) liegen, die das Virtual-Reality-Wiedergabesystem (vr) im wesentlichen kreisförmig umgeben und die gleiche Winkelabstände (wd) voneinader haben, wobei die Winkelabstände kleiner/gleich dem in der gleichen Ebene liegenden ersten Winkelbereich (w1) sind.

9. Virtual-Reality-Wiedergabesystem (vr) nach Anspruch 7 oder 8, dadurch gekennzeichnet, daß zur Erkennung von axialen Drehungen, insbesondere um die von der Blickrichtung (o) gebildete Achse, die optische Lageerkennungseinrichtung optische Polarisationseinrichtungen mit Polarisationsfiltern (f1, f2), mindestens eine Polarisations-Strahlungsquelle (qp) und mindestens einen Polarisations-Strahlungsempfänger (d4) enthält.

10. Virtual-Reality-Wiedergabesystem (vr) nach Anspruch 9, dadurch gekennzeichnet, daß das empfangene Signal, das mit der dritten Strahlungsquelle (q3) verkoppelt ist, ein erster Bezugswert (k3) und das Ausgangssignal (k4) des mindestens einen Polarisations-Strahlungsempfängers (d4) ein zweiter Bezugswert für die Berechnung des axialen Drehwinkels (wr) ist.

11. Virtual-Reality-Wiedergabesystem (vr) nach Anspruch 10, dadurch gekennzeichnet, daß der erste und zweite Bezugswert bei der Berechnung der Axialdrehung trigonometrischen Bezugswerten ($k3$, $k3 \cdot cos(wr)$ bzw $k3$, $k3 \cdot sin(wr)$) entsprechen, die sich auf die Polarisationsrichtungen eines ersten und zweiten Polaristionsfilters (f1, f2) beziehen.

EP 0 780 783 A1

**FIG.1**

vH

w1

oe

hH

H

o

w2

ob

vr

kk

ms

q

**FIG.2**

oe

d2  b2  d3  d1

of  b1

**FIG.3**

k2  k3  k1

d2  d3  d1

b2  of  b1

o2  o3  o1

**FIG.5**

k1  ad

sb1  aw  g1  p1

k3  ad

sb2  g2  p2

k2  ad

7

FIG.4

a)

b)

c)

d)

FIG.7

FIG.8

FIG.6

FIG.9

FIG.10

Europäisches
Patentamt

**EUROPÄISCHER RECHERCHENBERICHT**

Nummer der Anmeldung

EP 95 12 0501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | US-A-5 023 943 (HEBERLE KLAUS) 11.Juni 1991 <br> * das ganze Dokument * <br> --- | 1,7 | G06K11/08 |
| Y | WO-A-93 07602 (THOMSON CONSUMER ELECTRONICS) 15.April 1993 <br> * Seite 2, Zeile 1 - Seite 5, Zeile 6 * <br> --- | 1 | |
| Y | WO-A-95 09411 (VPL RESEARCH INC) 6.April 1995 <br> * Seite 1, Zeile 1 - Seite 3, Zeile 32 * <br> * Seite 7, Zeile 26 - Seite 8, Zeile 21 * | 1,7 | |
| A | ----- | 6,11 | |

**RECHERCHIERTE SACHGEBIETE (Int.Cl.6)**

G06K
G06F

Der vorliegende Recherchenbericht wurde für alle Patentansprüche erstellt

| Recherchenort | Abschlußdatum der Recherche | Prüfer |
|---|---|---|
| DEN HAAG | 4.Juni 1996 | Bailas, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
------------------------------------------------------------
& : Mitglied der gleichen Patentfamilie, übereinstimmendes Dokument

EPO FORM 1503 03.82 (P04C03)